# EUROPEAN PATENT APPLICATION

(11) **EP 4 552 475 A1**
(43) Date of publication of application: **14.05.2025**
(21) Application number: 23209276.7
(22) Date of filing: 10.11.2023
(51) Int. Cl.: A01F 12/44, F16J 15/16, F16J 15/50

(54) **GRAIN CLEANING SYSTEM FOR A COMBINE HARVESTER**

(71) Applicant: CNH Industrial Belgium N.V., 8210 Zedelgem (BE)
(72) Inventor: Staelens, Günther, 8210 Zedelgem (BE); Deprauw, Jonas, 8210 Zedelgem (BE); Vanderstichele, Michiel, 8210 Zedelgem (BE); Bailliu, Stijn, 8210 Zedelgem (BE); Benoot, Robin, 8210 Zedelgem (BE)
(74) Representative: CNH Industrial IP Department

(57) **Abstract**

The grain cleaning system comprises a support frame (20) and a sieve assembly mounted between two sidewalls (21a,21b) of the frame. The system is furthermore provided with one or more sealing assemblies for closing off openings (47) in the sidewalls of the support frame. The openings allow the passage of shafts (46) coupled at one end to a component of the sieve assembly, such as a grain pan or a sieve, and at the other end to a rocking arm (35) or to a drive arm (37) of an actuating mechanism for driving a fore-aft shaking movement of the sieve assembly components. The sealing assembly includes a sealing plate (48) and a biasing mechanism which may include one or more springs (49,65), for biasing the sealing plate against the sidewall during the fore-aft shaking movement. According to preferred embodiments, the sealing assembly continues to close off the opening when a side-shaking movement is superposed on the fore-aft shaking movement. The sealing assembly thereby effectively prevents the loss of grains and the passage of crop residue through said opening.

## Description

### Field of the invention

The present invention is related to grain cleaning systems as applicable in a combine harvester.

### State of the art.

Combine harvesters comprise a cleaning system including a sieve assembly for separating grain kernels from crop residue material. The sieve assembly usually comprises a grain pan and one or more sieves mounted on a support frame. The grain pan and the sieves are subjected by an actuating mechanism to a fore-aft shaking movement relative to the support frame, possibly with a sideshaking movement superposed thereon. In addition, the grain pan and the sieves are suspended from the frame by pivotable support arms referred to also a rocking arms, as these arms undergo a fore-aft rocking movement under the influence of the actuating mechanism.

The rocking arms and the actuating mechanism are mounted outside the support frame and are coupled to the sieves and the grain pan by transversal shafts, several of which pass through openings in the sidewalls of the support frame. In order to accommodate the fore-aft movement of the shafts, these openings need to be relatively large. Due to the high density of grains and crop residue in the vicinity of some of these openings, and driven also by the overpressure inside the support frame caused by the cleaning fan, grains and small residue particles are likely to pass through the openings from the interior of the support frame to the exterior thereof, leading to a grain loss and an unwanted accumulation of debris inside the combine harvester.

### Summary of the invention

The invention is related to a cleaning system for a combine harvester, and to a combine harvester as described in the appended claims. The grain cleaning system comprises a support frame and a sieve assembly mounted between two sidewalls of the frame. The system is furthermore provided with one or more sealing assemblies for closing off openings in the sidewalls of the support frame. The openings allow the passage of shafts coupled at one end to a component of the sieve assembly, such as a grain pan or a sieve, and at the other end to a rocking arm or to a drive arm of an actuating mechanism for driving a fore-aft shaking movement of the sieve assembly components. The sealing assembly includes a sealing plate and a biasing mechanism which may include one or more springs, for biasing the sealing plate against the sidewall continuously during the fore-aft shaking movement. According to preferred embodiments, the sealing assembly continues to close off the opening when a side-shaking movement is superposed on the fore-aft shaking movement. The sealing assembly thereby effectively prevents the loss of grains and the passage of crop residue through said opening.

### Brief description of the figures

Figure 1 is a conceptual side view of a combine harvester as known in the prior art.
Figure 2 shows part of a grain cleaning system comprising a number of sealing assemblies in accordance with an embodiment of the invention.
Figure 3 is a 3D view of a rocking arm of the cleaning system, equipped with a sealing assembly according to an embodiment of the invention.
Figures 4 and 5 illustrate two positions of the biasing mechanism of the sealing assembly shown in Figure 3.
Figure 6 illustrates a sealing assembly according to another embodiment.

### Detailed description of preferred embodiments of the invention

Preferred embodiments will now be described with reference to the drawings. The detailed description is not limiting the scope of the invention, which is defined only by the appended claims.

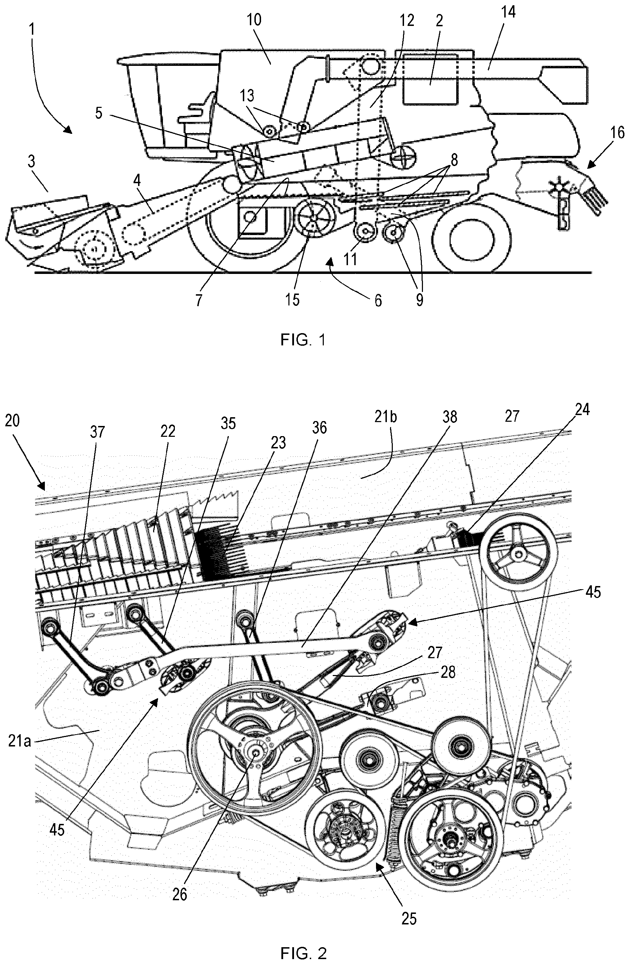

With reference to Figure 1, a combine harvester 1 as presently known in the art includes an engine 2, a header 3 for cutting crops from the field, and for gathering the crops towards the inlet of a feeder 4. The feeder delivers the crops to one or two threshing rotors 5 which separate larger crop material from grains and smaller residue. Longitudinally mounted threshing rotors may be applied as shown in the drawing, but transversely mounted rotors are equally possible.

The cleaning system 6 of the harvester includes a sieve assembly comprising a grain pan 7 and a plurality of sieves 8 for separating grains from the smaller residue. Insufficiently separated crop material, also called tailings, is transported back to the cleaning system, possibly after rethreshing, by the tailings augers 9. Fully separated grains are collected in a grain tank 10 through the combined action of a clean grain auger 11 and a grain elevator 12. From the tank 10, the grains may be evacuated from the harvester through further augers 13 at the bottom of the grain tank and through a pivotable spout 14. Small crop residue, also referred to as chaff, is blown towards the rear of the harvester by a cleaning fan 15. Larger crop residue such as crop stalks and leaves is moved to a chopper and spreader assembly 16, where it may be cut into smaller particles and spread out across a wide swath behind the advancing combine.

As stated in the introduction, the grain pan 7 and the sieves 8 are coupled to a drive mechanism, not shown in Figure 1 but known as such, configured to actuate fore-aft shaking movements to the components of the sieve assembly. Typically, the grain pan 7 is configured to shake in counterphase relative to one of the sieves 8.

The invention is not limited to the particular configuration shown in Figure 1 which is intended only to sketch the context to which the invention is applicable. The invention is in fact applicable to any sieve assembly including fore-aft moving cleaning components.

Figure 2 shows part of one side of a grain cleaning system of a combine harvester in accordance with an embodiment of the invention. The system includes a support frame 20 comprising left and right sidewalls 21a and 21b. The support frame is fixed to the chassis of the combine (not shown). The system further includes a grain pan 22, an upper sieve 23 and a lower sieve 24. The grain pan 22 and the sieves are moveably mounted between the two sidewalls, wherein the movements of these components include at least fore-aft shaking movements, i.e. cyclically alternating movements going back and forth in a direction essentially parallel to the sidewalls 21a and 21b. In the embodiment shown, the grain pan 22 and the upper sieve are also capable of undergoing a side-shaking movement superposed on the fore-aft shaking movement.

The cleaning system comprises an actuating mechanism 25 for driving the fore-aft shaking movements of the cleaning components. In the embodiment shown, the actuating mechanism includes a belt-operated system for driving the rotation of a transverse shaft 26, and eccentrically coupled drive arms 27,28 so that the drive arms perform a fore-aft shaking movement when the transverse shaft 26 rotates. The movements of arms 27 and 28 are in counterphase due to the relative placement of the eccentric couplings on the transverse shaft 26. The opposite ends of the drive arms are coupled respectively to the upper sieve and the lower sieve, which are suspended from the frame by rocking arms. The image shows one rocking arm 35 supporting the upper sieve, one rocking arm 36 supporting the lower sieve and one rocking arm 37 supporting the grain pan. The other rocking arms on the side of the left sidewall 21a are outside the image, while mirrored versions of the various arms are present also on the other side of the support frame 20. The fore-aft movement of the drive arms 27 is transferred to the rocking arms 37 of the grain pan by a connection arm 38. The upper sieve 23 and the grain pan 22 are thereby moving in phase, whereas the lower sieve 24 (driven by drive arms 28) moves in counterphase to said two components due to the relative placement of the respective eccentric couplings of the drive arms 27,28.

The drive arms 27,28 and the rocking arms 35-37 (on both sides of the frame 20) are located adjacent and outside of the left and right sidewall 21a and 21b of the support frame 20, and these arms are coupled to the sieves and the grain pan by shafts passing through respective openings in the sidewalls of the frame, which openings are large enough to allow the fore-aft movement of the shafts.

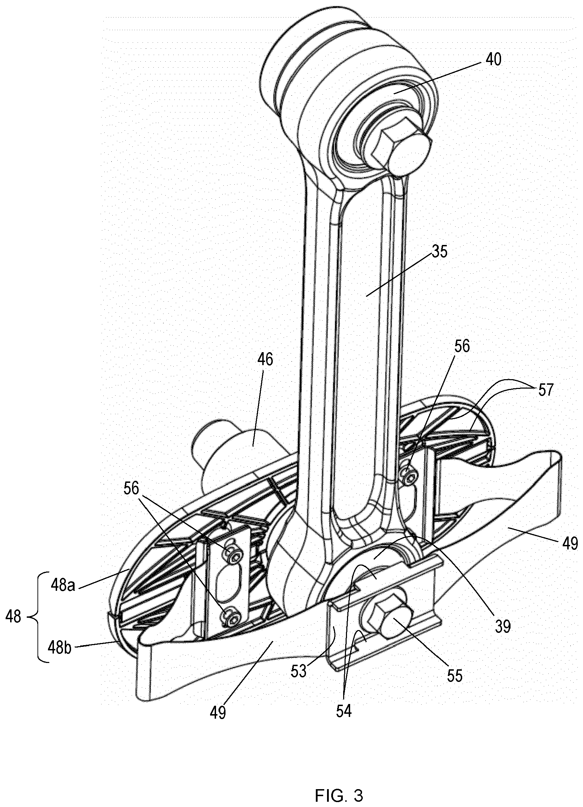

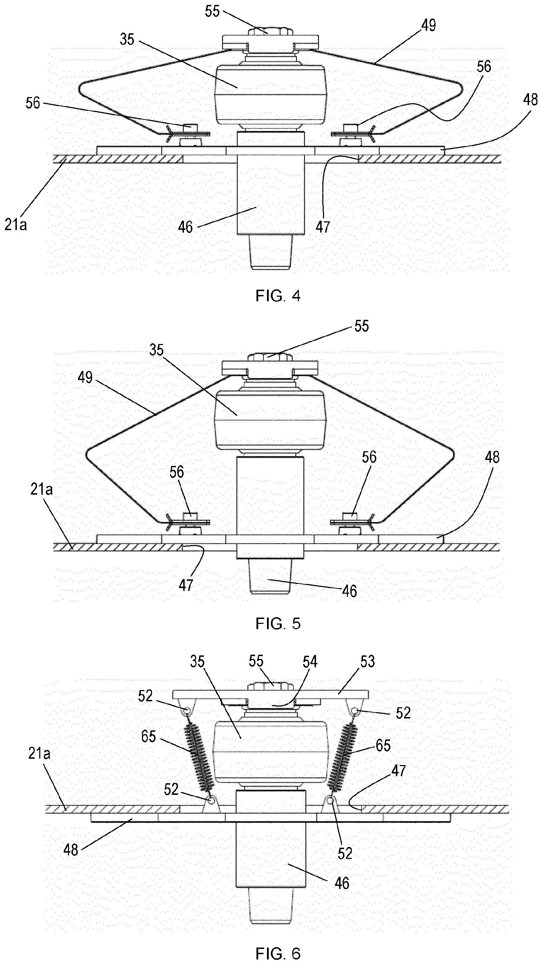

As shown Figure 2, two of the openings on the left side are closed off by a sealing assembly 45 in accordance with an embodiment of the invention. The sealing assembly is shown in more detail in Figures 3 and 4. These figures show one of the rocking arms 35 supporting the upper sieve but the same sealing assembly or variants thereof may be applied to other rocking arms and/or drive arms located adjacent the left and right sidewalls 21a and 21b.

The left sidewall 21a of the support frame is not shown in Figure 3, but a cross-section of the sidewall 21a is indicated in the parallel projection view in Figure 4. The images show part of the transversal shaft 46 passing through the opening 47 in the sidewall 21a. As well known in the art, this shaft 46 is inserted through the lower extremity of the rocking arm 35 and coupled thereto by a rotary bearing, enabling the arm 35 to pivot relative to the shaft 46. The other end of the shaft 46 (not shown) is fixed to the upper sieve or to a support bracket fixed to the sieve.

A bolt 55 attaches the shaft part 46 to a second shaft part (not shown) that is fixed to the sieve. Pivoting of the shaft 46 relative to the arm 35 is enabled by a first rotary bearing 39. The opposite end of the rocking arm 35 is pivotably coupled to a transverse axle (not shown) that is fixed to the support frame, with the help of a second rotary bearing 40 to enable the rocking movement of the arm 35 relative to the support frame.

The sealing assembly 45 comprises a sealing plate 48 coupled to the shaft 46. The sealing plate 48 comprises a central opening closely fitting around the shaft 46, while still allowing the shaft 46 to move axially relative to the sealing plate 48 or vice versa. The fit is however sufficiently tight so that the sealing plate 48 follows the movements of the shaft 46 in all directions parallel to the sidewall 21a of the support frame. In this particular embodiment, the sealing plate 48 is formed of two halves 48a, 48b which fit together around the shaft 46, possibly with a snap-fitting closure, with each half comprising a half-circular opening dimensioned to fit around one half of the shaft 46. Other embodiments are however possible, wherein the sealing plate 48 is an integral piece.

As seen in Figures 3 and 4, a two-sided leaf spring 49 is attached between the end of the shaft 46 and the back side of the sealing plate 48. The leaf spring 49 is fixed to the shaft 46 by the bolt 55, with a plate element 53 inserted between the bolt 55 and the spring 49. The plate element 53 comprises an upper and lower lip portion 54, which force the spring 49 to maintain a fixed orientation relative to the shaft 46. The spring 49 is attached to the sealing plate 48 by two sets of two screws 56 screwed into holes provided in the sealing plate 48. Other ways of attaching the spring 49 to the back side of the plate 48 are possible however.

The leaf spring 49 biases the front side of the sealing plate 48 against the sidewall 21a, i.e. the spring exerts a force on the sealing plate in the direction of the sidewall, so that the plate 48 is maintained in contact with the wall during the fore-aft movement of the rocking arm 35. Due to the bolt connection 55 provided with the plate element 53 and the tight fit of the sealing plate 48 around the shaft 46, the sealing plate 48 swings back and forth while maintaining essentially a fixed position relative to the shaft 46 and the outer extremity of the rocking arm 35 when the fore-aft shaking movement is in progress.

The surface area of the sealing plate 48 is large enough to cover the opening 47 through which the shaft 46 is protruding, regardless of the position of the rocking arm 35 during each consecutive cycle of its fore-aft rocking movement. This ensures that the opening 47 is closed off during said fore-aft movement, thereby obstructing the passage of grains or debris particles from the interior to the exterior of the support frame 20. According to preferred embodiments, the shape and the dimensions of the sealing plate 48 are chosen so that the edges of the sealing plate are at least between 10 and 15 mm removed from the edges of the opening 47, at any time during each cycle of the fore-aft shaking movement.

The biasing force exerted by the spring 49 ensures that the sealing plate 48 remains in close contact with the sidewall 21a, thereby effectively closing off the opening 47. In addition, the sealing assembly 45 maintains the effective closure of the opening 47 when a side-shaking movement is superposed on the fore-aft movement. This is illustrated in Figure 5, showing the sealing assembly when the shaft 46 is displaced axially outward from the support frame 20 relative to the position shown in Figure 4. This axial displacement takes place during one half-cycle of the side-shaking movement, i.e. the shaft 46 is cyclically moving in and out relative to the sidewall 21a of the support frame. During this half-cycle, the spring 49 extends but continues to bias the sealing plate 48 against the sidewall 21a, so that the opening 47 remains effectively closed. The sealing assembly 45 thereby ensures that the opening 47 is continuously closed off during simultaneous fore-aft shaking and side-shaking movements.

As illustrated in Figure 3, the sealing plate 48 may be provided with reinforcement ribs 57 on its back side. The front side of the sealing plate has a smooth surface able to glide with low friction relative to the outer surface of the sidewalls 21a and 21b. The material of the sealing plate 48 may be one of many suitable materials exhibiting suitable properties in terms of durability of the plate and low friction of the smooth front surface. According to preferred embodiments, the plate is formed of a synthetic material usable for producing the plate 48 or the plate halves 48a,48b by an injection moulding or thermoforming process. Suitable synthetic materials are plastics, preferably with good sliding performance, like low friction plastics, and possibly with fillers for improved sliding performance, like self-lubricating fillers or graphite. One suitable material applicable in this way is for example polyamide-6 with molybdenum sulphide (MoS₂) added thereto for lowering the friction coefficient.

The shape of the sealing plate 48 is preferably similar to the shape of the opening closed off by the plate. This is the case in the embodiment shown, wherein the plate has a shape defined by straight upper and lower edges and rounded side edges. The shape of the openings 47 is similar but of course smaller. The corresponding shape of the plate 48 is preferred as it enables closing off the opening 47 without making the sealing plate too large, so that it does not interfere with other elements mounted adjacent the sidewall. Having said this, the invention is not limited to any particular shape of the sealing plate, and other shapes are possible depending on the available free space on the sidewalls 21a,21b.

As seen in Figure 2, a similar sealing assembly 45 is mounted on the outer end of the drive arm 27, i.e. on the shaft connecting the drive arm 27 to the upper sieve. Sealing assemblies 45 are preferably mounted on the corresponding rocking arms and/or drive arms at the opposite side of the support frame, i.e. for closing off an opening in the right sidewall 21b. It may also be useful to mount a sealing assembly according to the invention on the drive shaft of the side-shaking movement. This drive shaft is a shaft similar to the connection shaft 46, connected at one end to the upper sieve for example, but coupled at the other end to an actuating mechanism mounted outside the support frame, for driving the side-shaking movement. The drive shaft therefore also passes through an opening in a sidewall of the support frame and a sealing assembly of the invention may be applied for closing off said opening.

The leaf spring 49 and its attachment to the shaft 46 and the sealing plate 48 represents one embodiment of the biasing mechanism referred to in the appended claims as being part of a sealing assembly applicable in a cleaning system according to the invention. The biasing mechanism may include another type of mechanical spring in stead of a leaf spring, for example one or more coil springs. An example of such an embodiment is shown in Figure 6, which also illustrates a further variation relative to the previous embodiment, namely that the sealing plate 48 is now biased against the inner surface of the sidewall 21a rather than against the outer surface. The front side and back side of the sealing plate 48 are defined in the same way as in the previous embodiment, i.e. the front side faces towards the sieve assembly and the back side faces away from the sieve assembly. So it is now the back side of the sealing plate 48 that has a smooth contact surface biased against the inner surface of the sidewall 21a. The biasing force is generated by a pair of coil springs 65 coupled between the plate element 53 and the back side of the sealing plate 48. The plate element 53 is again provided with lip portions 54 for fixing the orientation of the sealing plate 48, but it is now longer and provided with eyelets 52 in order to enable connecting the ends of the springs 65. The sealing plate 48 comprises similar eyelets 52 for connecting the opposite ends of the springs 65. The plate 48 is now pulled against the inner surface of the sidewall 21a by the coil springs 65, thereby effectively closing off the opening 47 during the fore-aft and side shaking movements. This embodiment may be applied for example if there is insufficient free space on the outer surface of the sidewalls. 21a,21b

Another embodiment does not require mechanical springs. According to this embodiment, one or more magnets are incorporated into the sealing plate 48. The sealing plate is fitted around the shaft 46 in the manner shown in the previous embodiments, and the biasing force is generated by the magnetic attraction between the magnet or magnets in the sealing plate and the sidewall 21a or 21b, provided that the latter is formed of a magnetic metal, such as iron or steel, which is the standard material for the support frame 20 of a combine harvester. An advantageous additional feature according to the latter embodiment is to couple the sealing plate 48 to the shaft 46 by a non-rotatable connection, for example by providing the plate 48 with a polygonal opening fitted around a corresponding polygonal section of the shaft 46, in order to maintain the sealing plate in a fixed orientation relative to the shaft 46 during the fore-aft and possibly also the side-shaking movements thereof.

The latter embodiment, i.e. the polygonal shape of the shaft and of the opening in the sealing plate, is one example of a blocking mechanism for fixing the orientation of the sealing plate during the fore-aft shaking movement. This blocking mechanism can also be used when the biasing mechanism comprises one or more springs. Another embodiment of such a blocking mechanism is the insertion of the plate element 53 provided with the lip portions 54, as illustrated in Figures 3 to 6.

As illustrated in Figure 2, it may not be required to provide every drive arm and every rocking arm with a sealing assembly according to the invention. The sealing assembly may be applied only at locations where a high density of grains and/or crop residue is expected.

## Claims

1. A grain cleaning system, comprising :
- a support frame (20), comprising two opposing sidewalls (21a,21b), each sidewall having an inner surface and an outer surface,
- a sieve assembly mounted at least partly between the inner surfaces of said opposing sidewalls, the sieve assembly comprising a plurality of components including one or more sieves, configured to undergo fore-aft shaking movements in a direction substantially parallel to the sidewalls (21a,21b),
- a first actuating mechanism (25) configured to drive said fore-aft shaking movements, said mechanism comprising one or more drive arms (27,28) coupled to one or more components of the sieve assembly,
- a plurality of rocking arms (35-37) having two ends and coupled at one end to the support frame (20) and at the other end to a component of the sieve assembly for supporting said component while enabling it to perform a fore-aft shaking movement,
wherein the rocking arms (35-37) and the drive arms (37,28) are coupled to the respective components of the sieve assembly by shafts (46) which are thereby configured to undergo the same fore-aft shaking movements as said respective components, and wherein at least one of said shafts (46) passes through an opening (47) in one of the sidewalls (21a,21b) of the support frame, the opening (47) being dimensioned to allow the fore-aft shaking movement of the shaft (46),
**characterised in that** :
- the cleaning system comprises at least one sealing assembly (45), including:
∘ a sealing plate (48) connected to the shaft (46) that passes through said opening (47), so that the sealing plate performs the same fore-aft movement as the shaft relative to the support frame (20) while being axially movable relative to the shaft (46), the sealing plate having a front side facing towards the sieve assembly and a back side facing away from the sieve assembly,
∘ a biasing mechanism configured to bias the sealing plate (48) against the inner or outer surface of the sidewall (21a,21b),
- the biasing mechanism and the dimensions of the sealing plate (48) are configured so that the sealing plate (48) is in physical contact with said inner or outer surface, thereby closing said opening (47) in the sidewall (21a,21b) during said fore-aft movement of the shaft (46).

2. The grain cleaning system according to claim 1, further comprising a second actuating mechanism configured to superpose a side-shaking movement relative to the support frame (20), onto the fore-aft shaking movement of a component of the sieve assembly coupled to the shaft (46) that passes through said opening (47), and wherein the biasing mechanism is configured to bias the sealing plate (48) against the sidewall (21a,21b) during the side-shaking movement.

3. The grain cleaning system according to claim 1 or 2, wherein the biasing mechanism comprise one or more springs (49,65) coupled between the shaft (46) and the back side of the sealing plate (48).

4. The grain cleaning system according to claim 3, wherein the one or more springs are configured to bias the front side of the sealing plate (8) against the outer surface of the sidewall (21a,21b).

5. The grain cleaning system according to claim 4, wherein biasing mechanism comprises a two-sided leaf spring (49).

6. The grain cleaning system according to claim 3, wherein the one or more springs are configured to bias the back side of the sealing plate (48) against the inner surface of the sidewall (21a,21b).

7. The grain cleaning system according to claim 6, wherein the biasing mechanism comprises two coil springs (65).

8. The grain cleaning system according to any one of the preceding claims, further comprising a blocking mechanism (53,54) configured to fix the orientation of the sealing plate (48) relative to the shaft (46) during said fore-aft shaking movement.

9. The grain cleaning system according to claim 1 or 2, wherein the sidewalls (21a,21b) of the support frame (20) are formed of magnetic metal and wherein the sealing plate (48) comprises one or more magnets configured to bias the sealing plate against the sidewall by a magnetic attraction force between the one or more magnets and the sidewall.

10. The grain cleaning system according to any one of the preceding claims, wherein the sealing plate (48) comprises a central opening and wherein the shaft (46) closely fits in said opening.

11. The grain cleaning system according to claim 10, wherein the sealing plate (48) is formed of two parts (48a,48b), each part comprising one half of an opening, each half fitting around one half of the shaft (46).

12. The grain cleaning system according to any one of the preceding claims, wherein the sealing plate (48) is at least partially formed of a synthetic material.

13. The grain cleaning system according to any one of the preceding claims, wherein the side of the sealing plate that is not in contact with the sidewall comprises reinforcement ribs (57).

14. A combine harvester comprising a grain cleaning system according to any one of the preceding claims.

15. A sealing assembly applicable in a grain cleaning system according to any one of claims 1 to 13.
